Europäisches Patentamt

European Patent Office

Office européen des brevets

(11) Veröffentlichungsnummer: **0 262 494**
**A1**

## (12) EUROPÄISCHE PATENTANMELDUNG

(21) Anmeldenummer: 87113336.9

(22) Anmeldetag: **11.09.87**

(51) Int. Cl.⁴: **G02B 6/28**

(30) Priorität: **23.09.86 DE 3632293**

(43) Veröffentlichungstag der Anmeldung:
**06.04.88 Patentblatt 88/14**

(84) Benannte Vertragsstaaten:
**DE FR GB IT**

(71) Anmelder: **Siemens Aktiengesellschaft Berlin und München**
**Wittelsbacherplatz 2**
**D-8000 München 2(DE)**

(72) Erfinder: **Wolf, Johann, Dipl.-Ing.**
**Föhrenweg 20**
**D-8401 Pentling(DE)**

(54) **Lichtwellenleiter.**

(57) Lichtwellenleiter mit planen Koppelfenstern. Erfindungsgemäß ist vorgesehen, daß an einem Leitungsstrang (3) Austrittsstutzen (1) mit konvexer Übergangszone (4) ausgebildet sind, die in einer planen Austrittsfläche (2) enden, die jeweils im wesentlichen senkrecht zur Austrittsrichtung (5) ausgerichtet ist.

FIG 1

EP 0 262 494 A1

# Lichwellenleiter

Die Erfindung bezieht sich auf Lichtwellenleiter mit planen Koppelfenstern. Derartige Lichtwellenleiter sind als optisches Bus-System bekannt, das zur Übertragung eine transparente Scheibe verwendet, deren Dicke groß sein kann in Relation zur verwendeten Lichtwellenlänge und die auf den beiden großen Außenflächen mit einem Grenzschichtmaterial mit einem beliebig komplexwertigen Brechungsindex so beschichtet ist, daß der für die Signalübertragung wesentliche Anteil der Lichtleistung im Lichtleiter geführt werden kann (DE-OS 34 00 840). An den Koppelfenstern können über eine feste oder lösbare Koppelzwischenschicht mit gerichteten oder ungerichteten optischen Sende- und Empfangselementen ausgestattete Bus-Teilnehmer Signale aus-oder einkoppeln.

Strangförmige Lichtwellenleiter, biegsam oder starr, aus Kunststoff oder Glas, werden in der Praxis zur Ankopplung gespleißt, mit einem Fasenanschnitt versehen oder in spezielle elektronische Koppler eingeführt. Alle diese Verfahren sind in der Montage schwierig, zeitaufwendig und kostspielig. Die Aus-und Einkopplung ist bei Lichtwellenleitern das Hauptproblem und die Koppler selbst verursachen einen wesentlichen Teil der Systemkosten. In der Montage ist insbesondere die Bearbeitung der Endflächen problematisch. Bei fester Verlegung fallen andererseits noch Justierkosten an.

Der Erfindung liegt die Aufgabe zugrunde, einen Lichtwellenleiter zu entwickeln, der die Ankopplung wesentlich erleichtert.

Die Lösung der geschilderten Aufgabe besteht bei einem Lichtwellenleiter mit planen Koppelfenstern darin, daß an einem Leitungsstrang Austrittsstutzen mit (von innen gesehen) konvexen Übergangszonen ausgebildet sind, die in einer planen Austrittsfläche enden, die jeweils im wesentlichen senkrecht zur Austrittsrichtung ausgerichtet ist. Geringe Abweichungen von der Senkrechten können in der Praxis vertretbar sein. Ein derartiger Lichtwellenleiter erstreckt sich im wesentlichen in Längsrichtung. Sein Querschnitt kann insbesondere rund, oval, rechteckig sein oder die Form eines Vielecks aufweisen. An den Austrittsflächen kann eine totalreflektierende Schicht fehlen oder auch verhältnismäßig leicht entfernt werden. Wenn eine totalreflektierende Schicht fehlt, ist die Ankopplung zu einem Gerät oder zu einem weiteren Strangförmigen Lichtwellenleiter besonders einfach.

Die Austrittsstutzen können am Umfang verteilt angeordnet sein und zum Ankoppeln von gleichbreiten Baugruppen gruppenweise äquidistant angeordnet sein.

Zur Durchverbindung bzw. Verlängerung der Lichtwellenleiter ist es günstig, wenn der Strang an seinen Enden senkrecht zur gedachten Seele des Strangs plane Austrittsflächen aufweist.

Die Erfindung soll nun anhand von in der Zeichnung grob schematisch wiedergegebenen Ausführungsbeispielen näher erläutert werden:

In Fig. 1 ist ein Lichtwellenleiter mit rundem Querschnitt, in Längsrichtung unterbrochen, in Seitenansicht wiedergegeben.

In Fig. 2 ist eine Ansicht auf die Unterbrechungsstelle, von links gesehen, dargestellt.

In Fig. 3 ist ein Lichtwellenleiter in der Darstellungsart nach Fig. 1, teilweise im Längsschnitt, für einen Leiter mit rechteckigem Querschnitt wiedergegeben.

In Fig. 4 ist die Aufsicht auf die Unterbrechungsstelle dargestellt.

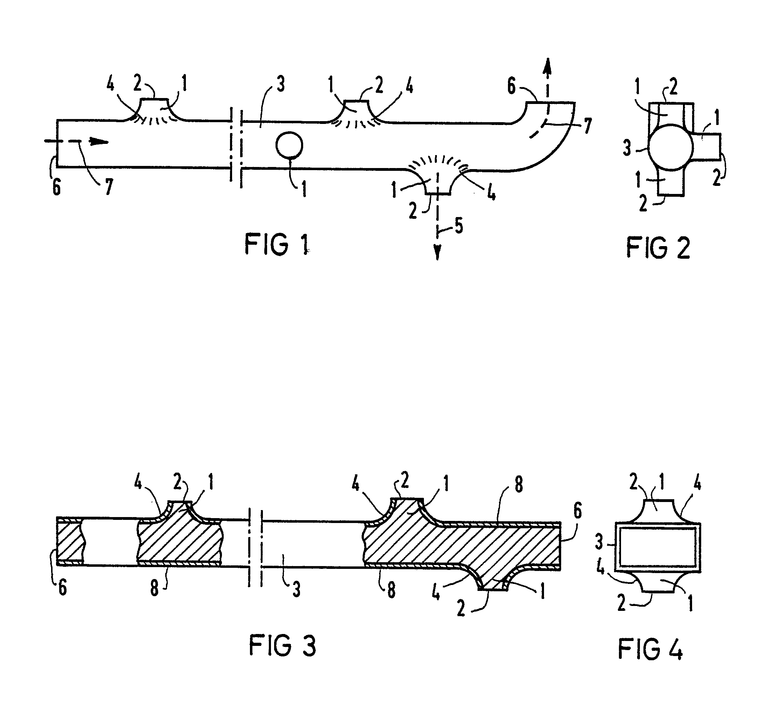

Der Lichtwellenleiter nach Fig. 1 weist an seinem Leitungsstrang 3 Austrittsstutzen 1 mit von innen gesehen konvexer Übergangszone 4 auf. Die Austrittsstutzen enden jeweils in einer planen Austrittsfläche 2, die senkrecht zur Austrittsrichtung ausgerichtet sind. An den Austrittsstutzen 1 können Geräte oder Zweigleitungen angekoppelt werden.

Der Leitungsstrang 3 weist an seinen Enden 6 senkrecht zur gedachten Seele 7 des Leitungsstranges 3 plane Austrittsflächen auf, um in der Richtung der Längserstreckung weitere Lichtwellenleiter zur Verlängerung ankoppeln zu können. Hier können auch spezielle Endgeräte zum Einkoppeln oder zum Auskoppeln durchgehender Information angeordnet werden.

Im Ausführungsbeispiel sind bei Austrittsstutzen 1 als domartige Erhebungen an einem Leitungsstrang 3 vorgesehen.

Aus dem Ausführungsbeispiel nach Fig. 3 ist aus der Schnittansicht die längs des Leitungsstrangs 3 aufgebrachte totalreflektierende Schicht 8 zu ersehen. Um beschichtete und nichtbeschichtete Stellen deutlich unterscheiden zu können, ist die totalreflektierende Schicht 8 im Ausführungsbeispiel überproportional dick dargestellt. Aus Fig. 4 ist der rechteckige Querschnitt des Leitungsstrangs 3 beim Ausführungsbeispiel nach Fig. 3 zu ersehen. Die Austrittsstutzen 1 weisen wieder eine konvexe Übergangszone 4 auf und enden in einer planen Austrittsfläche 2, die senkrecht zur Austrittsrichtung ausgerichtet ist. Es ist auch möglich, am Leitungsstrang 3 an planen Oberflächenbereichen dadurch anzukoppeln, daß die totalreflektierende Schicht 8 in Ankopplungsbereichen entfernt wird.

**Ansprüche**

1. Lichtwellenleiter mit planen Koppelfenstern, **dadurch gekennzeichnet**, daß an einem Leitungsstrang (3) Austrittsstutzen (1) mit konvexer Übergangszone (4) ausgebildet sind, die in einer planen Austrittsfläche (2) enden, die jeweils im wesentlichen senkrecht zur Austrittsrichtung (5) ausgerichtet ist.

2. Lichtwellenleiter nach Anspruch 1, **dadurch gekennzeichnet**, daß die Austrittsstutzen (1) domartige Erhebungen an einem Leitungsstrang sind.

3. Lichtwellenleiter nach Anspruch 1, **dadurch gekennzeichnet**, daß der Leitungsstrang (3) einen runden Querschnitt aufweist.

4. Lichtwellenleiter nach Anspruch 1, **dadurch gekennzeichnet**, daß die Austrittsflächen (2) frei von reflektierender Schicht sind.

5. Lichtwellenleiter nach Anspruch 1, **dadurch gekennzeichnet**, daß die Austrittsstutzen (1) am Umfang verteilt angeordnet sind.

6. Lichtwellenleiter nach Anspruch 1, **dadurch gekennzeichnet**, daß die Austrittsstutzen (1) zur Strangachse gruppenweise äquidistant ausgebildet sind.

7. Lichtwellenleiter nach Anspruch 1, **dadurch gekennzeichnet**, daß der Leitungsstrang (3) an seinen Enden (6) senkrecht zur gedachten Seele (7) des Leitungsstrangs (3) plane Austrittsflächen aufweist.

86 P 3353

FIG 1

FIG 2

FIG 3

FIG 4

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | DE-A-2 914 133 (LICENTIA) <br> * Figuren 1,3; Seite 6, Zeilen 5-12; Seite 8, Zeilen 9-16; Seite 11, Zeilen 6-12; Seite 12, Zeilen 14-25; Seite 13, Zeilen 1-6 * | 1 | G 02 B 6/28 |
| A | --- | 3-5,7 | |
| X | PATENT ABSTRACTS OF JAPAN, Band 1, Nr. 145, 5. November 1977, Seite 7251 E 77; & JP-A-52 82 249 (FURUKAWA DENKI KOGYO K.K.) 09-07-1977 <br> * Insgesamt * | 1 | |
| A | IDEM <br> --- | 2,3 | |
| Y | PATENT ABSTRACTS OF JAPAN, Band 1, Nr. 106, 31. August 1978, Seite 5555 E 78; & JP-A-53 70 832 (OKI DENKI KOGYO K.K.) 23-06-1978 <br> * Insgesamt * | 1 | |
| A | IDEM <br> --- | 6,7 | RECHERCHIERTE SACHGEBIETE (Int. Cl.4) |
| Y | US-A-4 019 051 (S.E. MILLER) <br> * Figur 4; Spalte 4, Zeilen 34-43 * <br> --- | 1 | G 02 B 6/28 <br> H 04 B 9/00 |
| A | PATENT ABSTRACTS OF JAPAN, Band 6, Nr. 92 (P-119) [970], 29. Mai 1982; & JP-A-57 27 202 (FUJITSU K.K.) 13-02-1982 <br> * Insgesamt * <br> --- | 1 | |
| A | US-A-4 173 390 (A. KÄCH) <br> * Figur 1A; Spalte 3, Zeilen 13-22 * <br> ----- | 1-3 | |

Der vorliegende Recherchenbericht wurde für alle Patentansprüche erstellt

| Recherchenort | Abschlußdatum der Recherche | Prüfer |
|---|---|---|
| DEN HAAG | 18-12-1987 | MATHYSSEK K. |